(19) Europäisches Patentamt
European Patent Office
Office européen des brevets

(11) **EP 3 200 961 B1**

(12) **EUROPÄISCHE PATENTSCHRIFT**

(45) Veröffentlichungstag und Bekanntmachung des Hinweises auf die Patenterteilung:
**31.08.2022 Patentblatt 2022/35**

(21) Anmeldenummer: **15797590.5**

(22) Anmeldetag: **28.09.2015**

(51) Internationale Patentklassifikation (IPC):
**B25J 9/16** (2006.01)

(52) Gemeinsame Patentklassifikation (CPC):
**B25J 9/1676; G05B 2219/40198; G05B 2219/40202**

(86) Internationale Anmeldenummer:
**PCT/DE2015/100404**

(87) Internationale Veröffentlichungsnummer:
**WO 2016/050238 (07.04.2016 Gazette 2016/14)**

(54) **VERFAHREN UND VORRICHTUNG ZUR STEUERUNG/REGELUNG EINES ROBOTER-MANIPULATORS**

METHOD AND DEVICE FOR OPEN-LOOP / CLOSED-LOOP CONTROL OF A ROBOT MANIPULATOR

PROCÉDÉ ET DISPOSITIF DE COMMANDE/RÉGULATION D'UN MANIPULATEUR DE ROBOT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.09.2014 DE 102014114234**

(43) Veröffentlichungstag der Anmeldung:
**09.08.2017 Patentblatt 2017/32**

(73) Patentinhaber: **Kastanienbaum GmbH**
**80538 München (DE)**

(72) Erfinder: **HADDADIN, Sami**
**30173 Hannover (DE)**

(74) Vertreter: **Rösler, Frank**
**Rösler · Rasch · van der Heide & Partner**
**Patent- und Rechtsanwälte PartG mbB**
**Bodenseestraße 18**
**81241 München (DE)**

(56) Entgegenhaltungen:
EP-A2- 1 046 470          DE-A1-102007 063 099
DE-A1-102009 058 607      DE-A1-102012 015 975
DE-A1-102013 212 887

• **Sami Haddadin: "Towards Safe Robots: Approaching Asimov's 1st Law", , 12. Oktober 2011 (2011-10-12), Seiten 42-45, XP055250770, Gefunden im Internet: URL:http://darwin.bth.rwth-aachen.de/opus3/volltexte/2011/3826/pdf/3826.pdf [gefunden am 2016-02-17]**

**Beschreibung**

Die Erfindung betrifft ein Verfahren und eine Vorrichtung zur Steuerung/Regelung eines Roboter-Manipulators, der einen Sensor zur Erfassung einer mechanischen Wechselwirkung mit einer Umgebung aufweist. Weiterhin betrifft die Erfindung einen Roboter mit einer ebensolchen Vorrichtung, sowie ein Computersystem, ein digitales Speichermedium, ein Computer-Programm-Produkt, und ein Computer-Programm.

Verfahren und Vorrichtungen zur Steuerung/Regelung eines Roboter-Manipulators sind bekannt. So geht beispielsweise aus der DE 102010048369 A1 ein Verfahren und eine Vorrichtung zur sicheren Steuerung wenigstens eines Roboter-Manipulators hervor, wobei wenigstens eine Sicherheitsfunktionalität überwacht wird. Eine Sicherheitsfunktionalität im Sinne der DE 102010048369 A1 bildet vorzugsweise genau eine elementare physikalische Größe oder Funktionalität ab, beispielsweise den Zustand bzw. Ausgang eines Schalters, Sensors oder einer Berechnungseinheit. Eine elementare physikalische Größe bzw. Funktionalität kann dabei auch mehrdimensional sein und dementsprechend auch durch mehrere Schalter, Sensoren und/oder Berechnungseinheiten gebildet sein. So kann beispielsweise eine auf den Manipulator wirkende externe Kraft, insbesondere am Tool Center Point (TCP), eine elementare physikalische Größe bzw. Funktionalität darstellen, die entsprechend durch eine Sicherheitsfunktionalität "Kraft am TCP" abgebildet und beispielsweise auf Vorhandensein bzw. Über- oder Unterschreiten eines Grenzwertes überwacht werden kann.

Eine Sicherheitsfunktionalität im Sinne der DE 102010048369 A1 kann eine Kontaktdetektion, insbesondere durch Erfassung einer ein- oder mehrdimensionalen Kontaktkraft, eine Kollisionsdetektion, insbesondere durch Erfassung von Kräften in Manipulatorgelenken oder -antrieben, eine Achsbereichsüberwachung, eine Bahntreue, insbesondere ein Schlauch um die kartesische Trajektorie, ein kartesischer Arbeitsraum, eine Sicherheitszone, eine Bremsrampe, ein Bremsen vor einer oder mehrerer Sicherheitszonen oder Raumgrenzen, eine Manipulator-Konfiguration, eine Werkzeugorientierung, eine Achsgeschwindigkeit, eine Ellbogengeschwindigkeit, eine Werkzeuggeschwindigkeit, eine maximale externe Kraft bzw. ein maximales externes Drehmoment, eine Distanz zur Umgebung oder einer Person, eine Haltekraft oder dergleichen sein.

Sicherheitsfunktionalitäten werden vorzugsweise in sicherer Technik, insbesondere redundant und vorzugsweise diversitär oder mit einem Sicherheitsprotokoll, überwacht. Bevorzugt werden hierzu ein oder mehrere Parameter, beispielsweise Ausgaben von Sensoren oder Berechnungseinheiten, unabhängig von einer Arbeitssteuerung des jeweiligen Manipulators erfasst und, insbesondere nach Weiterverarbeitung in einer Berechnungseinheit, beispielsweise einer Koordinatentransformation, gegen die Überschreitung von Grenzwerten überwacht. Kann wenigstens einer der zu erfassenden Parameter, beispielsweise aufgrund eines Sensorausfalls, nicht sicher erfasst werden, spricht in einer vorgeschlagenen Ausführung die entsprechende Sicherheitsfunktionalität an.

In der DE 102010048369 A1 wird nun vorgeschlagen, die Sicherheitsüberwachung als Zustandsmaschine zu implementieren, welche zwischen zwei oder mehr Zuständen wechseln kann, in denen jeweils eine oder mehrere der vorstehend erläuterten Sicherheitsfunktionalitäten überwacht werden, die für diesen Zustand vorgegeben sind. Die Implementierung kann dabei insbesondere durch eine entsprechende Programmierung und/oder einen entsprechenden Programmablauf, insbesondere als sogenannte virtuelle Zustandsmaschine, umgesetzt sein.

Weiterhin ist aus der DE 102013212887 A1 ein Verfahren zum Steuern einer Robotereinrichtung, aufweisend einen bewegbaren Roboter-Manipulator bekannt, bei dem eine Bewegungsgeschwindigkeit und/oder -richtung des Manipulators unter Berücksichtigung medizinischer Verletzungsparameter und einer Roboterdynamik überwacht und gegebenenfalls angepasst wird. Gemäß der DE 102013212887 A1 kann der Manipulator und/oder Effektor entlang einer vorgegebenen Bahn oder mit einer vorgegebenen Bewegungsgeschwindigkeit bewegbar sein. Die medizinischen Verletzungsparameter können Informationen beinhalten, die für eine Auswirkung einer Kollision zwischen dem Manipulator und einem menschlichen Körper repräsentativ sind, und können in dem Verfahren als Eingangsgröße verwendet werden. Die Auswirkung kann eine Verletzung eines menschlichen Körpers sein. Eine Bewegungsgeschwindigkeit und/oder -richtung des Manipulators kann bspw. durch Reduzieren angepasst werden, um eine Verletzung zu verringern oder zu verhindern. Eine Roboterdynamik kann eine physikalische, insbesondere ein kinetische Dynamik sein. Eine Roboterdynamik kann eine Dynamik eines starren und elastischen Mehrkörpersystems sein. Zum Überwachen und gegebenenfalls Anpassen der Bewegungsgeschwindigkeit und/oder -richtung des Manipulators können eine Kollisionsmasse, eine Kollisionsgeschwindigkeit und/ oder eine Kollision-Kontakt-Geometrie des Manipulators berücksichtigt werden. Eine Kollisionsmasse, eine Kollisionsgeschwindigkeit und/oder eine Kollision-Kontakt-Geometrie des Manipulators können in dem Verfahren als Eingangsgröße verwendet werden. Eine erwartete Kollisionsmasse, Kollisionsgeschwindigkeit und/oder Kollisions-Kontakt-Geometrie wenigstens eines vorgegebenen relevanten Punkts des Manipulators kann berücksichtigt werden. Die Erwartung kann sich dabei auf einen vermuteten oder bekannten Aufenthaltsort eines Menschen im Arbeitsbereich der Robotereinrichtung unter Berücksichtigung der vorgegebenen Bewegungsbahn beziehen. Zum Überwachen und gegebenenfalls Anpassen der Bewegungsgeschwindigkeit und/oder -richtung des Manipulators können Kennwerte herangezogen werden, die einen Zusammenhang zwischen Kollisionsmasse, Kollisionsgeschwindigkeit und/oder Kollisions-Kontakt-Geometrie des Manipulators einerseits und medizinischer Verletzungsparameter andererseits abbilden. Die Kennwerte können in Masse-Geschwindigkeits-Diagrammen für unterschiedliche Kontakt-Geometrien und unterschiedliche Verletzungsarten abgebildet sein. Die Kontakt-Geometrien können einfache repräsentative Geometrien sein. Eine Kontakt-Geometrie kann keilförmig sein. Die Kontakt-Geometrien können keilförmig mit unterschiedlichen Winkeln sein. Eine Kontakt-Geometrie kann kugelförmig sein. Die Kontakt-Geometrien können kugelförmig mit unterschiedlichen Durchmessern sein. Eine Verletzungsart kann eine Verletzung einer geschlossenen Haut eines Körpers sein. Eine Verletzungsart kann eine Verletzung von Muskeln und Sehnen eines Körpers sein.

Aus der EP 2 388 111 A2 ist ein Verfahren zum Betreiben eines Roboters bekannt, der wenigstens ein Glied aufweist, das gesteuert von einer Steuervorrichtung des Roboters mittels eines geregelten elektrischen Antriebs bewegbar ist. Der geregelte elektrische Antrieb umfasst einen zumindest indirekt mit den gliedmechanisch gekoppelten Elektromotor, ein den Elektromotor ansteuern des Stellglied und eine das Stellglied ansteuern Regelvorrichtung. Darüber hinaus ist ein roboterapplikationsspezifisches dynamisches Begrenzen des Wertes der Führungs- und/oder Stellgröße der Regelvorrichtung vorgesehen.

Aus der DE 10 2012 012 988 A1 ist eine Vorrichtung zur automatisierten Handhabung von Werkstücken, umfassend eine Objekterkennungseinrichtung zum Erfassen der Werkstücke, einen an einem Greifarm angeordneten Greifer zum Greifen der Werkstücke, eine Steuerung zur Auswertung der Daten der Objekterkennungseinrichtung zur Bahnplanung und zur Ansteuerung des Greifarms und des Greifers, einer Ausgleichseinheit, welche eine Ausweich-Bewegung des Greifers ermöglicht bekannt. Dabei ermöglicht die Ausgleichseinheit erst beim Überschreiten einer vorgegebenen ersten Belastung des Greifarm eine Ausweichbewegung des Greifers, während er unterhalb der ersten Belastung starr bleibt, wobei die erste Belastung größer ist als eine allein durch den Greifer und/oder das gegriffene Werkstück auf den Greifarm ausgeübte Belastung.

Aus der DE 10 2008 041 604 B4 ist ein Verfahren zum berührungslosen manuellen Steuern eines Roboters bekannt, das folgende Verfahrensschritte aufweist: Detektieren einer ersten Bewegung einer Person mittels in oder an einem Roboterarm eines Roboters und/oder an oder in einem am Roboterarm befestigten Endeffektor angeordneten berührungslosen Abstandssensors oder Detektieren des Abstands zwischen der Person und dem Roboter mittels des Abstandsensors und Bewegen des Roboterarms aufgrund der mittels des Abstandssensors detektierten ersten Bewegung und aufgrund der detektierten ersten Bewegung, Bewegen des Roboterarms derart, um ein Zusammenstoßen der Person mit dem Roboterarm zu verhindern und gleichzeitig die Lage einer Befestigungsvorrichtung des Roboterarms oder des Tool Center Points eines am Roboterarm angeordneten Endeffektors konstant zu lassen, Ermitteln einer vom Roboter aufzubringenden Soll-Kraft oder Soll-Drehmoments aufgrund des detektierten Abstands und/oder aufgrund einer Ableitung des detektierten Abstands zwischen der Person und dem Roboter, oder Auslösen einer Funktion des Roboters und/oder ein Parametrieren einer Funktion des Roboters aufgrund der ersten Bewegung und/oder aufgrund eines mittels des Abstandsensors detektierten Sollabstands und/oder dessen Ableitung zwischen der Person und dem Roboter.

Aus der US 2013/0304258 A1 ist ein Verfahren ein System zur mikro-kraft-geleiteten kooperativen Steuerung zur medizinischen Manipulation von empfindlichen Geweben bekannt.

Aus der US 2014/0052150 A1 ist ein Verfahren sowie ein System zur kooperativen Steuerung eines medizinischen Geräts bekannt, wobei das medizinische Gerät von einem Roboter gehalten wird.

Aus der DE 10 2012 015 975 A1 ist ein Verfahren zum Betreiben eines Sicherheitssystems für eine Produktionsstation mit wenigstens einem Roboter bekannt. Der Roboter umfasst eine Sensoreinheit, die am Roboter wirkende Kräfte und/oder Momente misst, wobei die gemessenen Kräfte und/oder Momente an eine Steuereinrichtung übermittelt werden, mittels welcher die gemessenen Größen mit wenigstens einem vorgegebenen Schwellwert verglichen werden, und wobei der Roboter in Abhängigkeit von dem Vergleichsergebnis gesteuert wird.

Weiterhin wird zum Stand der Technik auf folgende Dokumente verwiesen:
DE 10 2013 212887 A1; DE 10 2013 212887 A1; DE 12 2009 058607 A1; Sami Haddadin: "Towards Safe Robots: Approaching Asimov's 1st Law", PHD Thesis, 12. Oktober 2011, Seiten 42-45, XP055250770; DE 10 2007 063099 A1 und EP 1 046 470 A2.

Die Aufgabe der Erfindung ist es, ein Verfahren und eine Vorrichtung zur Steuerung/Regelung eines Roboter-Manipulators anzugeben, das/die ein Verletzungs- bzw. Beschädigungsrisiko bei einer Kollision des Roboter-Manipulators mit einem Objekt, insbesondere einem Menschen, weiter reduziert.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Die Aufgabe ist gemäß einem ersten Aspekt der Erfindung mit einem Verfahren zur Steuerung/Regelung eines Roboter-Manipulators, der zur Erfassung einer mechanischen Wechselwirkung mit einer Umgebung einen Sensor aufweist, gelöst, bei dem von dem Sensor ein Kraft-Zeitverlauf einer auf den Roboter-Manipulator wirkenden externen Kraft $\vec{F}(t)$ erfasst wird, eine Zeitspanne $\Delta t_1$ ermittelt wird, die die Zeitspanne vom Überschreiten eines vorgegebenen Grenzwertes G1 zur Zeit $t_0$ bis zum Erreichen eines darauffolgenden ersten Maximums $\text{Max1}(|\vec{F}(t)|)$ des Kraft-Zeitverlaufs $\vec{F}(t)$ zur Zeit $t_1$ angibt, eine Zeitspanne $\Delta t_2$ ermittelt wird, die eine Zeitspanne von $t_1$ bis zum Erreichen eines darauffolgenden ersten Minimums $\text{Min1}(|\vec{F}(t)|)$ des Kraft-Zeitverlaufs $\vec{F}(t)$ zur Zeit $t_2$ angibt, und ein Sicherheits-Modus des Roboter-Manipulators aktiviert wird, wenn gilt: $\Delta t_1 + \Delta t_2 = \Delta t_G < G2$ und/oder $\text{Max1}(|\vec{F}(t)|) > G3$, wobei G2 und G3 vorgegebene Grenzwerte sind, wobei der Sicherheits-Modus eine Bewegungsgeschwindigkeit $|\vec{V}(t)|$ und/oder eine Bewegungsrichtung $\vec{V}(t)/|\vec{V}(t)|$ steuert/regelt, die Bewegungsgeschwindigkeit $|\vec{V}(t)|$ und/oder die Bewegungsrichtung $\vec{V}(t)/|\vec{V}(t)|$ des Roboter-Manipulators vor dem Aktivieren des Sicherheits-Modus abhängig vor vorgegebenen medizinischen Parametern mit einer Geschwindigkeits- oder Drehmomentregelung gesteuert/geregelt wird/werden, und nach dem Aktivieren des Sicherheits-Modus von einer Kraft-Regelung, bei der die Bewegung des Roboter-Manipulators in Abhängigkeit der erfassten Kraft $\vec{F}(t)$ gesteuert/geregelt wird/werden, wobei die medizinischen Parameter einen Verletzungsgrad, einen Schmerzempfindungsgrad, einen Beschädigungsgrad und/oder einen anderen Risikograd parametrieren.

Unter dem Begriff "medizinischer Parameter" werden vorliegend insbesondere Parameter verstanden, die einen Verletzungsgrad, einen Schmerzempfindungsgrad, einen Beschädigungsgrad und/oder einen anderen Risikograd parametrieren.

Unter dem Begriff "Roboter-Manipulator" wird vorliegend der Teil eines mechanischen Roboters verstanden, der die physikalische Interaktion des Roboters mit der Umgebung ermöglicht, also der bewegliche Teil des Roboters, der die mechanische Arbeit des Roboters durchführt. Der Begriff "Roboter-Manipulator" umfasst insbesondere auch einen oder mehrere vorhandene Effektoren des Roboter-Manipulators, sowie ggf. ein vom Roboter-Manipulator gegriffenes Objekt. Der Begriff "Roboter" wird vorliegend breit verstanden. Darunter fallen beispielsweise Industrieroboter, Humanoide, flugfähige oder schwimmfähige Roboter.

Der Begriff "Kraft" bzw. "Kraft-Zeitverlauf" wird vorliegend breit verstanden. Er umfasst neben einfach gerichteten Kräften, auch antiparallele Kräftepaare oder als solche darstellbare Kräfte oder Kraftwirkungen, d.h. insbesondere auch Drehmomente, und weiterhin aus solchen Kräften oder Kraftwirkungen abgeleitete Größen, wie bspw. Druck (Kraft / Fläche) etc. Die erfasste Kraft $\vec{F}(t)$ bezieht sich vorliegend vorteilhaft nicht auf die Gravitationskraft und nicht auf die durch die Erdrotation hervorgerufene Corioliskraft.

Der Begriff "Betrag der Kraft $\vec{F}(t)$" schließt jede Metrik ein.

Der Sensor ist vorteilhaft ein Kraftsensor, ein Moment-Sensor, bspw. ein Drehmoment-Sensor. Vorteilhaft weist der Roboter-Manipulator mehrere solche Sensoren auf, um eine auf den Roboter-Manipulator wirkende externe Kraft mit ausreichender Auflösung in Bezug auf Angriffspunkt der Kraft und deren Betrag und Richtung zu erfassen. Die Formulierung "eine auf den Roboter-Manipulator wirkende externe Kraft $\vec{F}(t)$" impliziert in einer vorteilhaften Weiterbildung, dass neben der Richtung und dem Betrag der externen Kraft $\vec{F}(t)$ auch ein Angriffspunkt der Kraft $\vec{F}(t)$ am Roboter Manipulator bekannt ist/bzw. ermittelt wird.

Das vorgeschlagene Verfahren basiert darauf, dass der Roboter-Manipulator grundsätzlich abhängig von medizinischen Parametern gesteuert wird, so wie dies bspw. in der angeführten DE 102013212887 A1 beschrieben ist.

Erfindungsgemäß wird durch den zumindest einen Sensor ein Kraft-Zeitverlauf einer auf den Roboter-Manipulator wirkenden externen Kraft $\vec{F}(t)$ erfasst und zumindest temporär gespeichert. Die Erfassung bzw. Bereitstellung des Kraft-Zeitverlaufs kann in einer Alternative auch durch eine Schätzung der externen Kräfte auf Basis eines regelungstechnischen Modells des Roboter-Manipulators oder gar einer modellfreien Schätzung erfolgen. Der Begriff "Sensor" ist daher vorliegend breit auszulegen. Er umfasst auch ein regelungstechnisches Modell bzw. eine Schätzung, auf Basis dessen eine Rekonstruktion der externen Kraft $\vec{F}(t)$ erfolgen kann.

Der Sicherheits-Modus zeichnet sich dadurch aus, dass die Bewegungsgeschwindigkeit $|\vec{V}(t)|$ und/oder die Bewegungsrichtung $\vec{V}(t)/|\vec{V}(t)|$ in Abhängigkeit von dem erfassten Kraftvektor $\vec{F}(t)$ gesteuert/geregelt wird/werden. Das bedeutet vorliegend, dass die Steuerung/Regelung des Roboter-Manipulators auf einer Geschwindigkeits- oder Drehmomentregelung basiert, bei der die Bewegungsgeschwindigkeit $|\vec{V}(t)|$ und/oder die Bewegungsrichtung $\vec{V}(t)/|\vec{V}(t)|$ des Roboter-Manipulators nur abhängig von vorgegebenen medizinischen Parametern gesteuert/geregelt wird/werden. Sobald der Sicherheits-Modus aktiviert ist, wird mit anderen Worten bspw. von der vorher aktiven Geschwindigkeitssteuerung auf eine Kraft-Steuerung/Regelung des Roboter-Manipulators umgeschaltet, bei der die Bewegung des Roboter-Manipulators abhängig von der vom Sensor erfassten Kraft $\vec{F}(t)$ gesteuert/geregelt wird.

Dadurch ist es insbesondere möglich, Situationen zu erkennen und in eine entsprechende Steuerung/Reglung des Roboter-Manipulators umzusetzen, in denen es zu einer Quetschung eines Objekts durch den Roboter-Manipulator kommt, weil das Objekt nicht ausweichen kann und die Bewegung des Roboter-Manipulators sich in einer ständig steigenden Kraftwirkung äußert.

In einer Weiterbildung werden im Sicherheits-Modus Aktoren des Roboter-Manipulators abhängig von

der erfassten Kraft $\vec{F}(t)$ gesteuert. Vorteilhaft werden die von den Aktoren erzeugten Drehmomente abhängig von der erfassten Kraft $\vec{F}(t)$ individuell begrenzt. Vorteilhaft weist der Roboter-Manipulator ein oder mehrere Gelenke auf, wobei in einer vorteilhaften Weiterbildung zumindest ein Gelenkwinkel der Gelenke abhängig von der erfassten Kraft $\vec{F}(t)$ begrenzt wird.

Weiterhin zeichnet sich das erfindungsgemäß Verfahren dadurch aus, dass eine Zeitspanne $\Delta t_1$ ermittelt wird, die die Zeitspanne vom Überschreiten des Grenzwertes G1 zur Zeit $t_0$ bis zum Erreichen eines darauffolgenden ersten Maximums Max1($|\vec{F}(t)|$) des Kraft-Zeitverlaufs $\vec{F}(t)$ zur Zeit $t_1$ angibt, dass eine Zeitspanne $\Delta t_2$ ermittelt wird, die eine Zeitspanne von $t_1$ bis zum Erreichen eines darauffolgenden ersten Minimums Min1($|\vec{F}(t)|$) des Kraft-Zeitverlaufs $\vec{F}(t)$ zur Zeit $t_2$ angibt, und dass der Sicherheits-Modus erst dann aktiviert wird, wenn gilt: $\Delta t_1 + \Delta t_2 = \Delta t_G < G2$ und/oder Max1($|\vec{F}(t)|$) > G3, wobei G2 und G3 vorgegebene Grenzwerte sind.

Diese Verfahrensschritte dienen der Analyse des Zeitverlaufs der auf den Roboter-Manipulator einwirkenden externen Kraft. Typischerweise wird bei einer Kollision des Roboter-Manipulators mit einem Objekt zunächst ein Kraftstoß erzeugt, wobei abhängig von der Art der Kollision und der Kollisionsgeschwindigkeit innerhalb von einigen Millisekunden ($\Delta t_1 \sim 0{,}1$ bis 50 ms) ein erstes Betragsmaximum Max1($|\vec{F}(t)|$) der Kraft $\vec{F}(t)$ erreicht werden kann. Anschließend nimmt der Betrag der Kraft $\vec{F}(t)$ typischerweise ab. Abhängig davon, ob die Kollision mit dem Objekt einen elastischen Stoß, einen unelastischen Stoß, eine elastische oder plastische Verformung des Objekts oder des Roboter-Manipulators repräsentiert, ergibt sich ein unterschiedlicher Zeitverlauf der Kraft $\vec{F}(t)$ nach dem ersten Kraftstoß. Liegt eine Situation vor, in der nach dem Auftreten eines ersten Kraftstoßes, d.h. nach Durchschreiten eines ersten Maximums Max1($|\vec{F}(t)|$) und eines nachfolgenden ersten Minimum Min1($|\vec{F}(t)|$), die vom Sensor erfasste Kraft $\vec{F}(t)$ beständig ansteigt, so deutet dies typischerweise auf eine Quetschung des Objekts hin, d.h. eine Situation, bei der das (Kollisions-) Objekt der Bewegung des Roboter-Manipulators nicht mehr ausweichen kann und der Roboter die Kraft aus seinen Antrieben auf den geklemmten Körper übertragen kann. Durch entsprechende Wahl der Grenzwerte G2 und G3 kann das Verfahren auf die Erkennung derartiger Situationen angepasst werden.

Vorteilhaft wird, sofern für eine Zeit $t > t_2$ der Betrag der Kraft $|\vec{F}(t)|$ einen vorgegebenen Grenzwert G4 überschreitet: $|\vec{F}(t)| > G4$, eine aktuelle Bewegung des Roboter-Manipulators gestoppt.

Vorteilhaft wird, sofern für eine Zeit $t > t_2$ der Betrag der Kraft $|\vec{F}(t)|$ einen vorgegebenen Grenzwert G4 überschreitet: $|\vec{F}(t)| > G4$, eine Gravitations-Kompensation oder eine Nachgiebigkeitsregelung ausgeführt, bei der der Roboter-Manipulator derart angesteuert bzw. geregelt wird, dass nur die Gravitationskraft ausgeglichen wird und jede zusätzlich extern aufgebrachte Kraft dazu führt, dass der Roboter-Manipulators nachgiebig ausweicht.

Das verhindert Verletzungen oder Beschädigungen des Kollisionsobjektes bzw. des Roboter-Manipulators.

Weiterhin vorteilhaft wird nach dem vorstehend dargelegten Stoppen die bisherige Bewegung des Roboter-Manipulators in umgekehrter Richtung ausgeführt, bis gilt: $|\vec{F}(t)| < G5$, wobei dann erneut gestoppt wird. G5 ist dabei ein vorgegebener Grenzwert, welcher in einer vorteilhaften Verfahrensvariante gleich Null gewählt ist, d.h. G5 = 0.

Das vorgeschlagene Verfahren kann natürlich auch im Rahmen einer Off-Line-Analyse oder einer Planung einer Steuerung/Regelung eines Roboter-Manipulators eingesetzt werden. In diesem Fall wird das Erfassen der Kraft $\vec{F}(t)$ durch entsprechende Vorgaben eines Kraft-Zeitverlaufs ersetzt. Weiterhin wird der Roboter-Manipulator durch ein entsprechendes virtuell ansteuerbares/regelbares Modell ersetzt. Insbesondere lässt sich das vorgeschlagene Verfahren in einer virtuellen Anwendung vorteilhaft optimieren und testen.

Die Erfindung betrifft weiterhin eine Vorrichtung zur Steuerung/Regelung eines Roboter-Manipulators, umfassend: einen Sensor, der einen Kraft-Zeitverlauf einer auf den Roboter-Manipulator wirkenden externen Kraft $\vec{F}(t)$ erfasst, und eine Einheit, die derart ausgelegt und eingerichtet ist, dass eine Bewegungsgeschwindigkeit $|\vec{V}(t)|$ und/oder eine Bewegungsrichtung

$$\vec{V}(t) / |\vec{V}(t)|$$

des Roboter-Manipulators abhängig vor vorgegebenen medizinischen Parametern mit einer Geschwindigkeits- oder Drehmomentregelung gesteuert/geregelt wird/werden, und nach dem Aktivieren des Sicherheits-Modus von einer Kraft-Regelung, bei der die Bewegung des Roboter-Manipulators in Abhängigkeit der erfassten Kraft $F(t)$ gesteuert/geregelt wird/werden, wobei eine Zeitspanne $\Delta t1$ ermittelt wird, die die Zeitspanne vom Überschreiten des Grenzwertes G1 zur Zeit $t_0$ bis zum Erreichen eines darauffolgenden ersten Maximums Max1($|\vec{F}(t)|$) des Kraft-Zeitverlaufs $F(t)$ zur Zeit t1 angibt, eine Zeitspanne $\Delta t2$ ermittelt wird, die eine Zeitspanne von t1 bis zum Erreichen eines darauffolgenden ersten Minimums Min1($|\vec{F}(t)|$) des Kraft-Zeitverlaufs $\vec{F}(t)$ zur Zeit t2 angibt, und der Sicherheits-Modus erst dann aktiviert wird, wenn gilt: $\Delta t1 + \Delta t2 = \Delta t_G < G2$ und/oder Max1($|\vec{F}(t)|$) > G3, wobei G2 und G3 vorgegebene Grenzwerte sind, , wobei die medizinischen Parameter einen Verletzungsgrad, einen Schmerzempfindungsgrad, einen Beschädigungsgrad und/oder einen anderen Risikograd parametrieren

Eine vorteilhafte Weiterbildung der vorgeschlagenen Vorrichtung zeichnet sich dadurch aus, dass die Einheit weiterhin derart ausgeführt und eingerichtet ist, dass sofern für eine Zeit $t > t_2$ der Betrag der Kraft $|\vec{F}(t)|$ einen vorgegebenen Grenzwert G4 überschreitet: $|\vec{F}(t)| > G4$, eine aktuelle Bewegung des Roboter-Manipulators gestoppt wird.

Eine vorteilhafte Weiterbildung der vorgeschlagenen Vorrichtung zeichnet sich dadurch aus, dass die Einheit derart ausgeführt und eingerichtet ist, dass nach dem Stoppen die bisherige Bewegung des Roboter-Manipulators in umgekehrter Richtung ausführt wird, bis gilt: $|\vec{F}(t)| < G5$ und dann die Bewegung des Roboter-Manipulators erneut stoppt, wobei G5 ein vorgegebener Grenzwert ist.

Vorteile und zusätzliche Weiterbildungen der vorgeschlagenen Vorrichtung ergeben sich durch eine analoge und/oder sinngemäße Übertragung der in Zusammenhang mit dem vorgeschlagenen Verfahren gemachten Ausführungen.

Die Erfindung betrifft schließlich einen Roboter mit einer Vorrichtung, wie vorstehend beschrieben.

Weitere Vorteile, Merkmale und Einzelheiten ergeben sich aus der nachfolgenden Beschreibung, in der - gegebenenfalls unter Bezug auf die Zeichnungen - zumindest ein Ausführungsbeispiel im Einzelnen beschrieben ist. Gleiche, ähnliche und/oder funktionsgleiche Teile sind mit gleichen Bezugszeichen versehen.

Es zeigen:

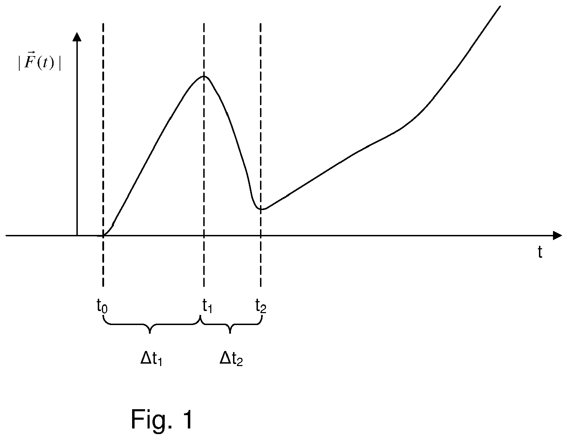

Fig. 1 einen typischen Kraft-Zeit-Verlauf bei einer Kollision des Roboter-Manipulators mit einem Objekt, im Falle einer räumlichen Blockierung des Objekts,

**Fig. 1** zeigt einen typischen Kraft-Zeit-Verlauf bei einer Kollision des Roboter-Manipulators mit einem Objekt im Falle einer räumlichen Blockierung des Objekts, d. h. im Falle, dass das Objekt nach der Kollision mit dem Roboter-Manipulator nicht ausweichen kann und somit räumlich fixiert ist und damit gequetscht wird.

In **Fig. 1** bezeichnet die x-Achse die Zeit t und die y-Achse den Betrag einer von einem Sensor erfassten externen Kraft: $|\vec{F}(t)|$, die auf den Roboter-Manipulator einwirkt. Wie der dargestellten Kurve zu entnehmen ist, wird beginnend zur Zeit $t_0$ vom Sensor eine externe Kraft erfasst, d.h. zur Zeit $t_0$ erfolgt eine Kollision des Roboter-Manipulators mit einem Objekt, bspw. einem Arm eines Menschen. Nach dem Erreichen eines ersten Maximums M1 zur Zeit $t_1$ nach bspw. 5 ms, fällt die vom Sensor erfasste Kraft in ihrem Betrag wieder ab, bis zur Zeit $t_2$ ein erstes Minimum erreicht ist. Der dargestellte Kraft-Zeit-Verlauf ist nicht maßstabsgetreu und gibt nur den qualitativen Kraftverlauf an.

Durch die räumliche Fixierung des Arms, bspw. ist der Arm zwischen dem Roboter-Manipulator und einer Wand angeordnet, wird der Arm durch die weitere Bewegung des Roboter-Manipulators gequetscht, was sich in der weiter ansteigenden Kraftkurve für eine Zeit größer als $t_2$ äußert.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterung in der Beschreibung, definiert wird.

**Patentansprüche**

1. Verfahren zur Steuerung/Regelung eines Roboter-Manipulators, der zur Erfassung einer mechanischen Wechselwirkung mit einer Umgebung einen Sensor aufweist, bei dem

   - von dem Sensor ein Kraft-Zeitverlauf einer auf den Roboter-Manipulator wirkenden externen Kraft $\vec{F}(t)$ erfasst wird,
   - eine Zeitspanne $\Delta t_1$ ermittelt wird, die die Zeitspanne vom Überschreiten eines vorgegebenen Grenzwertes G1 zur Zeit $t_0$ bis zum Erreichen eines darauffolgenden ersten Maximums $\text{Max1}(|\vec{F}(t)|)$ des Kraft-Zeitverlaufs $\vec{F}(t)$ zur Zeit $t_1$ angibt,
   - eine Zeitspanne $\Delta t_2$ ermittelt wird, die eine Zeitspanne von $t_1$ bis zum Erreichen eines darauffolgenden ersten Minimums $\text{Min1}(|\vec{F}(t)|)$ des Kraft-Zeitverlaufs $\vec{F}(t)$ zur Zeit $t_2$ angibt, und
   - ein Sicherheits-Modus des Roboter-Manipulators aktiviert wird, wenn gilt: $\Delta t_1 + \Delta t_2 = \Delta t_G < G2$ und/oder $\text{Max1}(|\vec{F}(t)|) > G3$, wobei G2 und G3 vorgegebene Grenzwerte sind,

   wobei

   - der Sicherheits-Modus eine Bewegungsgeschwindigkeit $|\vec{V}(t)|$ und/oder eine Bewegungs-

richtung $\vec{V}(t)/|\vec{V}(t)|$ steuert/regelt,
- die Bewegungsgeschwindigkeit $|\vec{V}(t)|$ und/oder die Bewegungsrichtung $\vec{V}(t)/|\vec{V}(t)|$ des Roboter-Manipulators vor dem Aktivieren des Sicherheits-Modus abhängig von vorgegebenen medizinischen Parametern mit einer Geschwindigkeits- oder Drehmomentregelung gesteuert/geregelt wird/werden, und nach dem Aktivieren des Sicherheits-Modus von einer Kraft-Regelung, bei der die Bewegung des Roboter-Manipulators in Abhängigkeit der erfassten Kraft $\vec{F}(t)$ gesteuert/geregelt wird/werden, wobei die medizinischen Parameter einen Verletzungsgrad, einen Schmerzempfindungsgrad, einen Beschädigungsgrad und/oder einen anderen Risikograd parametrieren.

2. Verfahren nach Anspruch 1,
   bei dem im Sicherheits-Modus zumindest ein Aktor des Roboter-Manipulators abhängig von der erfassten Kraft $\vec{F}(t)$ gesteuert/geregelt wird.

3. Verfahren nach Anspruch 2,
   bei dem ein von dem Aktor erzeugtes Drehmoment und/oder eine Stellung des Aktors und/oder eine Geschwindigkeit des Aktors abhängig von der erfassten Kraft $\vec{F}(t)$ individuell begrenzt werden.

4. Verfahren nach einem der Ansprüche 1 bis 3
   bei dem für G1 gilt: G1 = 0.

5. Verfahren nach einem der Ansprüche 1 bis 4,
   bei dem sofern für eine Zeit $t > t_2$ der Betrag der Kraft $|\vec{F}(t)|$ einen vorgegebenen Grenzwert G4 überschreitet: $|\vec{F}(t)| > G4$, eine aktuelle Bewegung des Roboter-Manipulators gestoppt wird.

6. Verfahren nach einem der Ansprüche 1 bis 4,
   bei dem sofern für eine Zeit $t > t_2$ der Betrag der Kraft $|\vec{F}(t)|$ einen vorgegebenen Grenzwert G4 überschreitet: $|\vec{F}(t)| > G4$, eine Gravitations-Kompensation ausgeführt wird, bei der der Roboter-Manipulator derart angesteuert/geregelt wird, dass nur die Gravitationskraft ausgeglichen wird und jede zusätzlich extern aufgebrachte Kraft dazu führt, dass der Roboter-Manipulators dieser nachgiebig ausweicht.

7. Verfahren nach Anspruch 5,
   bei dem nach dem Stoppen die bisherige Bewegung des Roboter-Manipulators in umgekehrter Richtung ausgeführt wird, bis gilt: $|\vec{F}(t)| < G5$ und dann erneut gestoppt wird, wobei G5 ein vorgegebener Grenzwert ist.

8. Verfahren nach Anspruch 7,
   bei dem gilt: G5 = 0.

9. Vorrichtung zur Steuerung/Regelung eines Roboter-Manipulators und zu Ausführung eines Verfahrens gemäß einem der Ansprüche 1 bis 8, umfassend:

   - einen Sensor, der einen Kraft-Zeitverlauf einer auf den Roboter-Manipulator wirkenden externen Kraft $\vec{F}(t)$ erfasst, und
   - eine Einheit, die derart ausgelegt und eingerichtet ist, dass eine Bewegungsgeschwindigkeit $|\vec{V}(t)|$ und/oder eine Bewegungsrichtung $\vec{V}(t)/|\vec{V}(t)|$ des Roboter-Manipulators abhängig von vorgegebenen medizinischen Parametern mit einer Geschwindigkeits- oder Drehmomentregelung gesteuert/geregelt wird/werden, und nach dem Aktivieren des Sicherheits-Modus von einer Kraft-Regelung, bei der die Bewegung des Roboter-Manipulators in Abhängigkeit der erfassten Kraft $\vec{F}(t)$ gesteuert/geregelt wird/werden, wobei eine Zeitspanne $\Delta t1$ ermittelt wird, die die Zeitspanne vom Überschreiten des Grenzwertes G1 zur Zeit $t_0$ bis zum Erreichen eines darauffolgenden ersten Maximums Max1($|\vec{F}(t)|$) des Kraft-Zeitverlaufs $\vec{F}(t)$ zur Zeit t1 angibt, eine Zeitspanne $\Delta t2$ ermittelt wird, die eine Zeitspanne von t1 bis zum Erreichen eines darauffolgenden ersten Minimums Min1($|\vec{F}(t)|$) des Kraft-Zeitverlaufs $\vec{F}(t)$ zur Zeit t2 angibt, und der Sicherheits-Modus erst dann aktiviert wird, wenn gilt: $\Delta t1 + \Delta t2 = \Delta tG < G2$ und/oder Max1($|\vec{F}(t)|$) > G3, wobei G2 und G3 vorgegebene Grenzwerte sind, wobei die medizinischen Parameter einen Verletzungsgrad, einen Schmerzempfindungsgrad, einen Beschädigungsgrad und/oder einen anderen Risikograd parametrieren.

10. Roboter mit einer Vorrichtung nach Anspruch 9

**Claims**

1. Method for controlling/regulating a robot manipulator, which has a sensor for detecting a mechanical interaction with an environment, in which

   - a force-time curve of an external force $\vec{F}(t)$ acting on the robot manipulator is detected by the sensor,
   - a time span $\Delta t_1$ is determined, which indicates the time span from exceeding a predetermined threshold G1 at the time $t_0$ to reaching a subsequent first maximum Max1($|\vec{F}(t)|$) of the force-time curve $\vec{F}(t)$ at the time $t_1$,
   - a time span $\Delta t_2$ is determined, which indicates a time span from $t_1$ to reaching a subsequent first minimum Min1($|\vec{F}(t)|$) of the force-time curve

$\vec{F}$(t) at the time $t_2$, and

- a safety mode of the robot manipulator is activated if: $\Delta t_1 + \Delta t_2 = \Delta t_G < G2$ and/or Max1($|\vec{F}(t)|$) > G3, wherein G2 and G3 are predetermined thresholds,

wherein

- the safety mode controls/regulates a movement speed $|\vec{V}(t)|$ and/or a movement direction $\vec{V}(t) / |\vec{V}(t)|$,
- the movement speed $|\vec{V}(t)|$ and/or the movement direction $\vec{V}(t) / |\vec{V}(t)|$ of the robot manipulator is/are controlled/regulated with a speed or torque control prior to activation of the safety mode as a function of predetermined medical parameters, and after activation of the safety mode is/are controlled by a force control, in which the movement of the robot manipulator is controlled/regulated as a function of the detected force $F(t)$, wherein the medical parameters parameterize a degree of injury, a degree of pain perception, a degree or damage and/or another degree of risk.

2. Method according to Claim 1, in which in safety mode, at least one actuator of the robot manipulator is controlled/regulated as a function of the detected force F(t).

3. Method according to Claim 2, in which a torque generated by the actuator and/or a position of the actuator and/or a speed of the actuator are individually limited as a function of the detected force F(t).

4. Method according to one of Claims 1 to 3, in which G1 = 0 applies to G1.

5. Method according to one of Claims 1 to 4, in which if for a time t > $t_2$ the magnitude of the force $|\vec{F}(t)|$ exceeds a predetermined threshold G4: $|\vec{F}(t)| > G4$, a current movement of the robot manipulator is stopped.

6. Method according to one of Claims 1 to 4, in which if for a time t > $t_2$ the magnitude of the force $|\vec{F}(t)|$ exceeds a predetermined threshold G4: $|\vec{F}(t)| > G4$, a gravitation compensation is carried out, in which the robot manipulator is controlled/regulated in such a way that only the gravitational force is compensated and any additional externally applied force causes the robot manipulator to yield to this.

7. Method according to Claim 5, in which after stopping, the previous movement of the robot manipulator is carried out in the reverse direction, until: $|\vec{F}(t)| < G5$ and then it is stopped again, wherein G5 is a predetermined threshold.

8. Method according to Claim 7, in which G5 = 0.

9. Device for controlling/regulating a robot manipulator and for carrying out a method in accordance with one of Claims 1 to 8, comprising:

- a sensor, which detects a force-time curve of an external force $\vec{F}(t)$ acting on the robot manipulator, and
- a unit, which is designed and set up in such a way that a movement speed $|\vec{V}(t)|$ and/or a movement direction $\vec{V}(t) / |\vec{V}(t)|$ of the robot manipulator is/are controlled/regulated with a speed or torque control as a function of predetermined medical parameters, and after activation of the safety mode is/are controlled by a force control, in which the movement of the robot manipulator is controlled/regulated as a function of the detected force **F(t),** wherein a time span $\Delta\mathbf{t_1}$ is determined, which indicates the time span from exceeding the threshold G1 at the time $t_0$ to reaching a subsequent first maximum Max1($|\vec{F}(t)|$) of the force-time curve $\vec{F}(t)$ at the time $t_1$, a time span $\Delta t_2$ is determined, which indicates a time span from $t_1$ to reaching a subsequent first minimum Min1($|\vec{F}(t)|$) of the force-time curve $\vec{F}(t)$ at the time $t_2$, and the safety mode is only activated if: $\Delta t_1 + \Delta t_2 = \Delta t_G < G2$ and/or Max1($|\vec{F}(t)|$) > G3, wherein G2 and G3 are predetermined thresholds, wherein the medical parameters parameterize a degree of injury, a degree of pain perception, a degree or damage and/or another degree of risk.

10. Robot having a device according to Claim 9.

**Revendications**

1. Procédé, destiné à commander / réguler un manipulateur de robot, qui pour détecter une interaction mécanique avec un environnement comporte un capteur, lors duquel

- le capteur détecte une courbe force-temps d'une force externe $\vec{F}(t)$ agissant sur le manipulateur de robot,
- il est déterminé une période $\Delta t_1$ qui indique la période à partir du dépassement d'une valeur limite G1 prédéfinie au temps $t_0$ jusqu'à l'atteinte d'un premier maximum suivant Max1 ($|\vec{F}(t)|$) de la courbe force-temps $\vec{F}(t)$ au temps $t_1$,
- il est déterminé une période $\Delta t_2$ qui indique la une période allant de $t_1$, jusqu'à l'atteinte d'un premier minimum suivant Min1($|\vec{F}(t)|$) de la courbe force-temps $\vec{F}(t)$ au temps $t_2$, et

- le mode de sécurité du manipulateur de robot est actionné, lorsque : $\Delta t_1 + \Delta t_2 = \Delta t_G$ < G2 et/ou Max1 ($|\vec{F}(t)|$) > G3 est applicable, G2 et G3 étant des valeurs limites prédéfinies,
- le mode de sécurité commandant/régulant une vitesse de déplacement $|\vec{V}(t)|$ et/ou une direction de déplacement $|\vec{V}(t)|/|\vec{V}(t)|$,
- avant l'activation du mode de sécurité, la vitesse de déplacement $|\vec{V}(t)|$ et/ou la direction de déplacement $|\vec{V}(t)|/|\vec{V}(t)|$ du manipulateur de robot étant commandé(s)/régulé(s) en fonction de paramètres médicaux prédéfinis, par une régulation de la vitesse ou du couple de rotation, et après l'activation du mode de sécurité, étant commandé(s)/régulé(s) par une régulation de la force, lors de laquelle le déplacement du manipulateur de robot est commandé/régulé en fonction de la force $\vec{F}(t)$ détectée, les paramètres médicaux paramétrant un gravité de blessure, un niveau de sensation de la douleur, un niveau de dommage et/ou un autre niveau de risques.

2. Procédé selon la revendication 1,
Lors duquel, en mode de sécurité, au moins un actionneur du manipulateur de robot est commandé/régulé, en fonction de la force $\vec{F}(t)$ détectée.

3. Procédé selon la revendication 2,
lors duquel un couple de rotation commandé par l'actionneur et/ou une position de l'actionneur et/ou une vitesse de l'actionneur sont limités individuellement en fonction de la force $\vec{F}(t)$ détectée.

4. Procédé selon l'une quelconque des revendications 1 à 3,
lors duquel pour G1 : G1 = 0 est applicable.

5. Procédé selon l'une quelconque des revendications 1 à 4,
lors duquel, si pour un temps $t > t_2$ la valeur de la force $|\vec{F}(t)|$ dépasse une valeur limite G4 prédéfinie : $|\vec{F}(t)|$ > G4, un déplacement actuel du manipulateur de robot est arrêté.

6. Procédé selon l'une quelconque des revendications 1 à 4,
lors duquel, si pour un temps $t > t_2$ la valeur de la force $|\vec{F}(t)|$ dépasse une valeur limite G4 prédéfinie : $|\vec{F}(t)|$ > G4, il est procédé à une compensation de la gravitation, lors de laquelle le manipulateur de robot est activé/réglé de telle sorte, que seule le force de gravitation soit compensée et toute autre force additionnellement appliquée par voie externe ait pour effet que le manipulateur de robot l'esquive flexiblement.

7. Procédé selon la revendication 5,
lors duquel, après l'arrêt, l'actuel déplacement du manipulateur de robot est réalisé en sens inverse, jusqu'à ce que : $|\vec{F}(t)|$ < G5 soit applicable et ensuite arrêté à nouveau, G5 étant une valeur limite prédéfinie.

8. Procédé selon la revendication 7,
lors duquel : G5 = 0 est applicable.

9. Dispositif, destiné à commander/réguler un manipulateur de robot et à réaliser un procédé selon l'une quelconque des revendications 1 à 8 précédentes, comprenant :

- un capteur, qui détecte une courbe force-temps d'une force $\vec{F}(t)$ externe, agissant sur le den manipulateur de robot, et
- une unité, qui est conçue et aménagée de telle sorte, qu'une vitesse de déplacement $|\vec{V}(t)|$ et/ou une direction de déplacement $|\vec{V}(t)|/|\vec{V}(t)|$ du manipulateur de robot soi(en)t commandée(s)/régulée(s) en fonction de paramètres médicaux prédéfinis, par une régulation de la vitesse ou du couple de rotation, et après l'activation du mode de sécurité soi(en)t commandée(s)/régulée(s) par une régulation de la force, lors de laquelle le déplacement du manipulateur de robot est commandé/régulé en fonction de la force $\vec{F}(t)$ détectée, une période $\Delta t_1$ étant déterminée, qui indique la période à partir du dépassement de la valeur limite G1 au temps $t_0$ jusqu'à l'atteinte d'un premier Maximum suivant Max1 ($|\vec{F}(t)|$) de la courbe force-temps $\vec{F}(t)$ au temps $t_1$, une période $\Delta t_2$ étant déterminée, qui indique une période à partir de $t_1$ jusqu'à l'atteinte d'un premier minimum suivant Min1($|\vec{F}(t)|$) de la courbe force-temps au temps $t_2$, et le mode de sécurité n'étant activé que lorsque : $\Delta t_1 + \Delta t_2 = \Delta t_G$ < G2 et/ou Max1 ($\vec{F}(t)$ |) > G3 est applicable, G2 et G3 étant des valeurs limites prédéfinies, les paramètres médicaux paramétrant un gravité de blessure, un niveau de sensation de la douleur, un niveau de dommage et/ou un autre niveau de risques.

10. Robot, doté d'un dispositif selon la revendication 9.

Fig. 1

EP 3 200 961 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010048369 A1
- DE 102013212887 A1
- EP 2388111 A2
- DE 102012012988 A1
- DE 102008041604 B4
- US 20130304258 A1

- US 20140052150 A1
- DE 102012015975 A1
- DE 122009058607 A1
- DE 102007063099 A1
- EP 1046470 A2

**In der Beschreibung aufgeführte Nicht-Patentliteratur**

- **SAMI HADDADIN.** Towards Safe Robots: Approaching Asimov's 1st Law. *PHD Thesis,* Oktober 2011, vol. 12, 42-45